# EUROPEAN PATENT APPLICATION

(11) **EP 2 437 332 A1**
(43) Date of publication of application: **04.04.2012**
(21) Application number: 10780341.3
(22) Date of filing: 12.03.2010
(51) Int. Cl.: H01M 4/13, H01M 4/139, H01M 4/62, H01M 4/70, H01M 4/80

(54) **POSITIVE ELECTRODE AND PROCESS FOR PRODUCING SAME**

(30) Priority: 27.05.2009 JP 2009128221; 27.05.2009 JP 2009128222; 27.05.2009 JP 2009128223
(71) Applicant: Sumitomo Electric Industries, Ltd., Chuo-ku Osaka-shi Osaka 541-0041 (JP)
(72) Inventor: OTA, Nobuhiro, Itami-shi Hyogo 664-0016 (JP); UEMURA, Takashi, Itami-shi Hyogo 664-0016 (JP); OGAWA, Mitsuyasu, Itami-shi Hyogo 664-0016 (JP); KANDA, Ryoko, Itami-shi Hyogo 664-0016 (JP)
(74) Representative: Setna, Rohan P.
(86) International application number: PCT/JP2010/054212
(87) International publication number: WO 2010/137381

(57) **Abstract**

A positive-electrode member for producing a nonaqueous electrolyte battery having a high discharge capacity and an excellent cycle characteristic, and a method for producing the positive-electrode member are provided. The positive-electrode member includes a positive-electrode collector composed of a metal; and a positive-electrode active-material layer (positive-electrode active-material portion) 10B that allows for electron transfer between the positive-electrode collector and the positive-electrode active-material layer 10B. The positive-electrode active-material layer 10B includes positive-electrode active-material particles 1 and a solid electrolyte 2 that fixes the particles 1. The contours of the particles 1 that are next to each other partially conform to each other. To produce such a positive-electrode member, a raw-material sol obtained by mixing positive-electrode active-material particles with substances that turn into a solid electrolyte through polycondensation by heating is applied to a positive-electrode collector, and the resultant member is heated and subsequently pressed.

## Description

### Technical Field

The present invention relates to a positive-electrode member used as the positive-electrode layer of a nonaqueous electrolyte battery and a method for producing the positive-electrode member.

### Background Art

Relatively small electrical devices such as portable devices employ, as a power supply, a nonaqueous electrolyte battery that has a positive-electrode layer having a positive-electrode collector and a positive-electrode active-material layer, a negative-electrode layer having a negative-electrode collector and a negative-electrode active-material layer, and an electrolyte layer disposed between these electrode layers. Among nonaqueous electrolyte batteries, in particular, lithium-ion batteries, which are charged and discharged through movements of lithium ions between the positive electrode and the negative electrode, have excellent charging-discharging characteristics. For example, Patent Literature 1 discloses a lithium-ion battery employing a sinter of a lithium oxide as a positive-electrode active-material layer.

### Citation List

### Patent Literature

PTL 1: Japanese Unexamined Patent Application Publication No. 8-180904

### Summary of Invention

### Technical Problem

However, there are cases where such a lithium-ion battery employing a sinter as a positive-electrode active-material layer does not have a sufficiently high discharge capacity. This is because electron conductivity and lithium-ion conductivity at the grain boundaries of a positive-electrode active material in the positive-electrode active-material layer are low.

In a lithium-ion battery employing a sinter, a positive-electrode active-material layer composed of the sinter repeatedly expands and contracts due to charging and discharging and it may be damaged by cracking or the like, or the positive-electrode active-material layer and the positive-electrode collector that are joined may become separated from each other. As a result, as charging and discharging of the battery are repeated, the discharge capacity of the battery tends to decrease, that is, the cycle characteristic of the battery becomes poor. In particular, when the battery is used at a high current density, such a problem tends to become serious.

The present invention has been made under such circumstances and an object of the present invention is to provide a positive-electrode member for producing a nonaqueous electrolyte battery having a high discharge capacity and an excellent cycle characteristic, and a method for producing such a positive-electrode member.

### Solution to Problem

(1) A positive-electrode member according to the present invention is a positive-electrode member used as a positive-electrode layer of a nonaqueous electrolyte battery, the positive-electrode member including a positive-electrode collector composed of a metal, and a positive-electrode active-material portion that allows for electron transfer between the positive-electrode active-material portion and the positive-electrode collector. The positive-electrode active-material portion in the positive-electrode member includes a group of particles of a positive-electrode active material and a solid electrolyte that fixes the group of the particles. The contours of the positive-electrode active-material particles that are next to each other in the positive-electrode active-material portion partially conform to each other.

In a configuration according to the present invention, in the positive-electrode active-material portion, the solid electrolyte disposed in the gaps between positive-electrode active-material particles having been plastically deformed allows for conduction of lithium ions between the active-material particles that are close to each other. The lithium-ion conductivity at the interface between positive-electrode active-material particles that are in contact with each other is inherently very low, compared with lithium-ion conductivity within the particles. Accordingly, a configuration in which the particles are simply in contact with each other results in a positive-electrode member having a low lithium-ion conductivity. In contrast, as in a positive-electrode member according to the present invention in which a solid electrolyte is disposed in the gaps between the particles, lithium ions can be smoothly conducted between the particles that are close to each other and hence the discharge capacity of the battery can be increased. Note that, when active-material particles are sintered, the lithium-ion conductivity at grain boundaries is high, compared with a configuration in which the particles are simply in contact with each other; however, it is low, compared with a configuration according to the present invention in which a solid electrolyte is disposed between the particles.

In a configuration according to the present invention, stress generated by expansion and contraction of the positive-electrode active material can be absorbed with the solid electrolyte disposed in the gaps between the positive-electrode active-material particles. Accordingly, when a positive-electrode member according to the present invention is used for a nonaqueous electrolyte battery, the cycle characteristic of the battery can be enhanced.

In addition, in a configuration according to the present invention, in the positive-electrode active-material portion of a positive-electrode member according to the present invention, active-material particles have been plastically deformed so that the contours of the particles partially conform to each other. Thus, the lithium-ion conductivity between the particles has increased. As a result, when a positive-electrode member according to the present invention is used for a nonaqueous electrolyte battery, an increase in the internal resistance in the battery can be suppressed and the discharge capacity of the battery can be increased. In addition, the plastic deformation causes cracking to occur in the positive-electrode active-material particles and the cracking can absorb expansion and contraction of the particles due to charging and discharging of the battery.

A positive-electrode member according to the present invention can be broadly divided into two configurations in terms of the form of a collector used. A first form and a production method relating thereto are described in (2) to (7) below. A second form and a production method relating thereto are described in (8) to (13) below.

(2) In a first configuration of a positive-electrode member according to the present invention, the positive-electrode collector is a solid plate, and the positive-electrode active-material portion is a layer disposed on a surface of the positive-electrode collector.

When the positive-electrode active-material portion is formed as a layer, by simply changing the thickness of the layer, the amount of the positive-electrode active material contained in the positive-electrode active-material portion can be readily adjusted.

(3) In a positive-electrode member including the plate-shaped positive-electrode collector according to the present invention, the surface of the positive-electrode collector preferably has an arithmetic mean roughness Ra (Japanese Industrial Standard (JIS) B0601 2001) of 100 nm or more.

In such a configuration, since the surface of the positive-electrode collector on which the layer-shaped positive-electrode active-material portion is formed has a complex irregularly shaped structure, the surface area of the surface, that is, the current-collecting area becomes large and hence the current density of a battery can be increased. In addition, the adhesion between the positive-electrode active-material portion and the positive-electrode collector is enhanced due to the anchoring effect and hence the cycle characteristic of a battery can be enhanced.

(4) In a positive-electrode member including the plate-shaped positive-electrode collector according to the present invention, the area percentage of the solid electrolyte in an arbitrary section of the positive-electrode active-material layer is preferably 20% or less.

When the percentage of the solid electrolyte with respect to the positive-electrode active-material portion is in this range, a sufficiently large amount of active-material particles can be ensured in the positive-electrode active-material portion. The higher the percentage of the active-material particles becomes, the higher the capacity of the resultant battery becomes. However, the solid electrolyte that mediates conduction of lithium ions between the particles is also necessary and hence the area percentage of the solid electrolyte is preferably made 2% or more.

(5) A method for producing a positive-electrode member according to the present invention is a method for producing a positive-electrode member used as a positive-electrode layer of a nonaqueous electrolyte battery, the method including the following steps:
a step of providing an alkoxide solution obtained by dissolving, in a solvent, metal alkoxides that turn into a lithium-ion-conductive solid electrolyte through polycondensation, or an alkoxide solution obtained by dissolving hydrolysates of the metal alkoxides in a solvent;
a step of preparing a raw-material sol by mixing the alkoxide solution with active-material particles;
a step of providing a positive-electrode collector that is a metal plate and applying the raw-material sol to a surface of the positive-electrode collector;
a step of turning the metal alkoxides or the hydrolysates of the metal alkoxides in the raw-material sol into the solid electrolyte through polycondensation by heating, to form a positive-electrode active-material portion that is a layer (positive-electrode active-material layer) in which a group of the positive-electrode active-material particles is fixed with the solid electrolyte on the surface of the positive-electrode collector; and
a step of pressing the positive-electrode active-material portion to plastically deform the particles in the positive-electrode active-material portion such that contours of the particles that are next to each other partially conform to each other.

According to a production method including these steps, a positive-electrode member according to the present invention can be produced in which a positive-electrode active-material layer is formed on a plate-shaped positive-electrode collector and positive-electrode active-material particles in the positive-electrode active-material layer have been plastically deformed.

In a method for producing a positive-electrode member according to the present invention, since a positive-electrode active-material layer is formed from a raw-material sol, in the process of turning metal alkoxides or the hydrolysates of the metal alkoxides in the raw-material sol into a solid electrolyte, a solvent contained in the raw-material sol evaporates and cavities are formed in the positive-electrode active-material layer. However, in a method for producing a positive-electrode member according to the present invention, since the cavities are squashed in the pressing of the positive-electrode active-material layer, for example, a decrease in the lithium-ion conductivity of the positive-electrode member due to the cavities scarcely occurs.

(6) In a method for producing a positive-electrode member according to the present invention, the surface of the positive-electrode collector provided preferably has an arithmetic mean roughness Ra (JIS B0601 2001) of 100 nm or more.

When such a positive-electrode collector having a rough surface is used as in this configuration, positive-electrode active-material particles fit into recesses of the surface and the movement of the active-material particles is constrained. Thus, when the positive-electrode active-material layer is pressed, the stress of the pressing can be efficiently applied to the active-material particles.

Although a surface of a positive-electrode collector has been conventionally roughened, in this case, the surface is made to have an arithmetic mean roughness Ra of less than 100 nm. This is because, when a surface of a positive-electrode collector is excessively roughened, a disadvantage is caused rather than an advantage provided by roughening the surface. For example, when a positive-electrode active-material layer is formed by a vapor-phase method, the positive-electrode active-material layer is formed so as to conform to the surface profile of a positive-electrode collector. When the surface profile of the positive-electrode collector is too rough, there may be cases where the positive-electrode active-material layer is not formed in some portions. In contrast, in a method for producing a positive-electrode member according to the present invention, a positive-electrode active-material layer is formed by applying a raw-material sol to a surface of a positive-electrode collector. Accordingly, even when the surface has an Ra of 100 nm or more, portions where the positive-electrode active-material layer is not formed scarcely occur.

(7) In a method for producing a positive-electrode member according to the present invention, in the pressing, a pressure in a range of 100 to 1000 MPa is preferably applied.

When the pressing is performed with this pressure range, active-material particles can be plastically deformed with certainty. In addition, by performing the pressing with the pressure range, almost all the cavities formed in the positive-electrode active-material layer can be squashed. Accordingly, a dense positive-electrode active-material layer, that is, a positive-electrode active-material layer having a high discharge capacity per volume can be formed.

(8) In a second configuration of a positive-electrode member according to the present invention, the positive-electrode collector is a porous member including a plurality of pores, and the positive-electrode active-material portion is disposed in the pores of the positive-electrode collector.

In this configuration, since the positive-electrode active-material portion is formed in the pores of the porous collector, the collector can be made to be in three-dimensional contact with the positive-electrode active-material portion. As a result, compared with use of a non-porous plate-shaped collector, the current-collecting area can be made large and hence the current density of a battery can be increased. In addition, the porous collector serves as a framework to suppress cracking of the positive-electrode member due to expansion and contraction of the positive-electrode active-material portion. As a result, the cycle characteristic of a battery can be enhanced.

(9) In a positive-electrode member including the porous collector according to the present invention, the area percentage of the solid electrolyte in an arbitrary section of the positive-electrode active-material portion is preferably 20% or less.

In this configuration, a sufficiently large amount of active-material particles can be ensured in the positive-electrode active-material portion disposed in the pores. The higher the percentage of the active-material particles becomes, the higher the capacity of the resultant battery becomes. However, the solid electrolyte that mediates conduction of lithium ions between the particles is also necessary and hence the area percentage of the solid electrolyte is preferably made 5% or more.

(10) In a positive-electrode member including the porous collector according to the present invention, a porosity that represents a percentage of the pores with respect to the porous collector is preferably 90 to 98 vol%.

The porosity is determined in consideration of the volume ratio of the plate-shaped positive-electrode collector to the positive-electrode active-material layer of a normal battery. For example, in batteries for high-power applications, the ratio of the volume of the plate-shaped positive-electrode collector to the volume of the positive-electrode active-material layer is 1:7 to 1:12. When a porous collector is prepared with reference to this volume ratio, the porosity of the porous collector becomes 90 to 98 vol%. When the porosity is in this range, the positive-electrode member is well-balanced between the active-material component and the current-collecting component; and use of this positive-electrode member allows for the production of a high-power battery. The porosity is more preferably 95 to 98 vol%.

(11) A method for producing a positive-electrode member according to the present invention is a method for producing a positive-electrode member used as a positive-electrode layer of a nonaqueous electrolyte battery, the method including the following steps:
a step of providing an alkoxide solution obtained by dissolving, in a solvent, metal alkoxides that turn into a lithium-ion-conductive solid electrolyte through polycondensation, or an alkoxide solution obtained by dissolving hydrolysates of the metal alkoxides in a solvent;
a step of preparing a raw-material sol by mixing the alkoxide solution with active-material particles;
a step of providing a positive-electrode collector that is a porous metal member (porous collector) and filling pores of the positive-electrode collector with the raw-material sol;
a step of turning the metal alkoxides or the hydrolysates of the metal alkoxides in the raw-material sol into the solid electrolyte through polycondensation by heating, to form, in the pores, a positive-electrode active-material portion in which the active-material particles are fixed with the solid electrolyte; and
a step of pressing a positive-electrode active-material phase to plastically deform the particles in the positive-electrode active-material portion such that contours of the particles that are next to each other partially conform to each other.

According to a production method including these steps, the movement of positive-electrode active-material particles is constrained in the pores of the porous collector, the pores being narrow spaces. Accordingly, when the positive-electrode member is pressed, the stress of the pressing tends to be applied to the active-material particles. Thus, by a method for producing a positive-electrode member according to the present invention, a positive-electrode member according to the present invention in which a positive-electrode active-material phase is formed in the pores of a porous collector and positive-electrode active-material particles in the positive-electrode active-material phase have been plastically deformed can be produced.

In such a method for producing a positive-electrode member according to the present invention, since a positive-electrode active-material phase is formed from a raw-material sol, in the process of turning metal alkoxides or the hydrolysates of the metal alkoxides in the raw-material sol into a solid electrolyte, a solvent contained in the raw-material sol evaporates and cavities are formed in the positive-electrode active-material phase. However, in a method for producing a positive-electrode member according to the present invention, the cavities are squashed in the pressing of the positive-electrode member and hence, for example, a decrease in the lithium-ion conductivity of the positive-electrode member due to the cavities scarcely occurs. The porous collector composed of metal has a function of maintaining the shape of the positive-electrode member having been pressed and hence re-formation of cavities having been squashed in the positive-electrode active-material phase scarcely occurs.

(12) In a method for producing a positive-electrode member according to the present invention, a porosity that represents a percentage of the pores with respect to the provided porous collector is preferably 90 to 98 vol%.

In a porous collector having a porosity in this range, the pores of the collector can be readily filled with a raw-material sol. In addition, when the porosity is in the range, the positive-electrode member is well-balanced between the active-material component and the current-collecting component.

(13) In a method for producing a positive-electrode member according to the present invention, in the pressing, a pressure in a range of 100 to 1000 MPa is preferably applied.

When the pressing is performed with this pressure range, active-material particles can be plastically deformed with certainty. In addition, by performing the pressing with the pressure range, almost all the cavities formed in the positive-electrode active-material phase can be squashed. Accordingly, a dense positive-electrode active-material phase, that is, a positive-electrode active-material phase having a high discharge capacity per volume can be formed.

### Advantageous Effects of Invention

Use of a positive-electrode member according to the present invention allows for production of a battery having a high discharge capacity and an excellent cycle characteristic.

### Brief Description of Drawings

[Fig. 1] Figure 1 is a schematic longitudinal sectional view of a lithium-ion battery (nonaqueous electrolyte battery) according to a first embodiment.
[Fig. 2] Figure 2 is a schematic longitudinal sectional view of a lithium-ion battery according to a second embodiment.
[Fig. 3] Figure 3 is a schematic view schematically illustrating a scanning electron microscope (SEM) photograph of a positive-electrode active-material layer included in a positive-electrode member in EXAMPLE 1.
[Fig. 4] Figure 4 is a schematic view schematically illustrating a SEM photograph of a positive-electrode active-material layer included in a positive-electrode member in

### COMPARATIVE EXAMPLE 2.

### Description of Embodiments

Hereinafter, embodiments of the present invention will be described with reference to the drawings.

### (First embodiment)

### <General configuration of nonaqueous electrolyte battery>

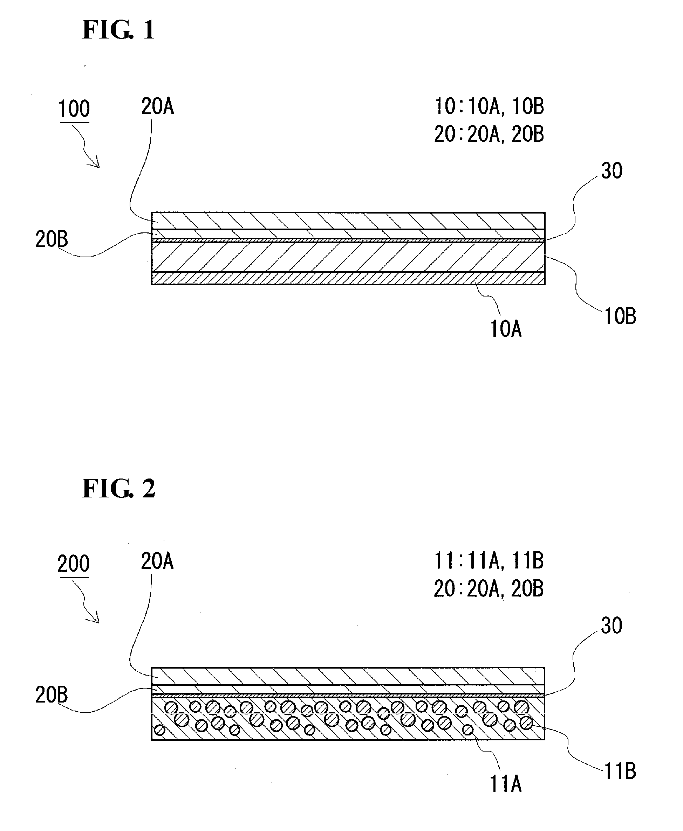

Figure 1 is a schematic longitudinal sectional view illustrating a normal lithium-ion battery (nonaqueous electrolyte battery). This lithium-ion battery 100 includes a positive-electrode layer 10, a negative-electrode layer 20, and an electrolyte layer 30 disposed between these electrode layers 10 and 20. The positive-electrode layer 10 includes a positive-electrode collector 10A and a positive-electrode active-material layer 10B. The negative-electrode layer 20 includes a negative-electrode collector 20A and a negative-electrode active-material layer 20B. The battery 100 has the most distinguishable feature of employing, as the positive-electrode layer 10, a positive-electrode member according to the present invention. Accordingly, the positive-electrode layer (positive-electrode member) 10 will be mainly described in the following description.

### <Method for producing positive-electrode member>

The positive-electrode member 10 is produced by a production method including the following steps 1 to 5.
[Step 1] Provide an alkoxide solution obtained by dissolving, in a solvent, metal alkoxides that turn into a lithium-ion-conductive solid electrolyte through polycondensation, or an alkoxide solution obtained by dissolving the hydrolysates of the metal alkoxides in a solvent.
[Step 2] Prepare a raw-material sol by mixing the alkoxide solution in Step 1 with active-material particles.
[Step 3] Provide the positive-electrode collector 10A that is a metal plate and apply the raw-material sol in Step 2 to a surface of the positive-electrode collector 10A.
[Step 4] Turn the metal alkoxides or the hydrolysates of the metal alkoxides in the raw-material sol into the solid electrolyte through polycondensation by heating, to form the positive-electrode active-material layer 10B in which the group of the positive-electrode active-material particles is fixed with the solid electrolyte on the surface of the positive-electrode collector 10A.
[Step 5] Press the positive-electrode active-material layer 10B to plastically deform the positive-electrode active-material particles in the positive-electrode active-material layer 10B such that the contours of the active-material particles that are next to each other partially conform to each other.

### <<Step 1>>

Examples of the lithium-ion-conductive solid electrolyte include LiNbO₃, Li₄Ti₅O₁₂, and LiTaO₃. As for the metal alkoxides that finally produce such a solid electrolyte through polycondensation, for example, the combination of ethoxylithium (LiOC₂H₅) and pentaethoxyniobium (Nb(OC₂H₅)₅) is preferred, and ethoxylithium and pentaethoxyniobium produce LiNbO₃ through hydrolysis and polycondensation. Alternatively, to produce Li₄Ti₅O₁₂, metal alkoxides such as LiOC₂H₅ and Ti(OC₄H₉)₄ can be used; and to produce LiTaO₃, metal alkoxides such as LiOC₂H₅ and Ta(OC₂H₅)₅ can be used. As the hydrolysates of metal alkoxides, the hydrolysates of the above-described metal alkoxides can be used.

As the solvent of the alkoxide solution, when the solute is metal alkoxides, for example, an alcohol solvent such as ethyl alcohol or methyl alcohol can be used. When the solute is the hydrolysates of metal alkoxides, an aqueous solvent can be used or a solvent mixture of an alcohol solvent and an aqueous solvent can be used.

Although the concentration of the solute in the alkoxide solution is not particularly limited, it is preferably 5 to 30 mol/ml. An advantage provided by achieving a concentration in this range will be described in the description of Step 2 below.

### <<Step 2>>

As the positive-electrode active-material particles that are mixed with the alkoxide solution in the preparation of the raw-material sol, a lithium-containing oxide can be used. This lithium-containing oxide is preferably a substance represented by a chemical formula of LiαO₂ or Liβ_{2O4} (note that α and β include at least one of Co, Mn, and Ni). Specific examples include LiCoO₂, LiNiO₂, LiMnO₂, and LiMn₂O₄. In addition, a substance containing an element other than Co, Mn, and Ni such as LiCo_{0.5}Fe_{0.5}O₂ can be used. The raw-material sol may contain an electrically conductive auxiliary such as acetylene black.

Although the concentration of positive-electrode active-material particles in the raw-material sol obtained by mixing the positive-electrode active-material particles with the alkoxide solution should be appropriately selected in accordance with the amount of the positive-electrode active material in the positive-electrode member 10 to be produced and the concentration of the solute (metal alkoxides or the hydrolysates thereof) in the alkoxide solution, it is preferably in the range of about 5 to 50 g/ml. When the concentration of the solute in the alkoxide solution in Step 1 is made 5 to 30 mol/ml, the viscosity of the alkoxide solution becomes about 200 to 500 mPa·s. In this case, in the mixing of active-material particles with the alkoxide solution, the active-material particles can be readily uniformly dispersed in the raw-material sol.

### <<Step 3>>

The positive-electrode collector 10A provided is preferably a plate composed of a metal. This metal may be an elemental metal such as Al, Cu, or Ni or an alloy such as stainless steel.

In the positive-electrode collector 10A provided, a surface to which the raw-material sol is applied preferably has an arithmetic mean roughness Ra of 100 nm or more, more preferably 400 nm or more. When the positive-electrode collector 10A has a surface having such a roughness and the raw-material sol is applied to the surface, positive-electrode active-material particles contained in the raw-material sol enter recesses in the surface and the movement of the particles is constrained. As a result, in Step 5 described below, the positive-electrode active-material particles can be plastically deformed effectively. To obtain a positive-electrode collector with an Ra of 100 nm or more, for example, a surface of a positive-electrode collector is polished or etched.

The raw-material sol prepared in Step 2 may be applied to a surface of the positive-electrode collector in Step 3 by a publicly known application method such as a doctor blade method. The raw-material sol is naturally applied such that the positive-electrode collector serving as a base is not exposed from the applied layer.

### <<Step 4>>

To turn the metal alkoxides into a solid electrolyte through hydrolysis and polycondensation or to turn the hydrolysates of the metal alkoxides into a solid electrolyte through polycondensation, a heat treatment should be performed. The heat treatment is preferably performed at 200°C to 300°C for 0.5 to 6 h. When the solid electrolyte is generated at such a temperature, a decrease in the strength of the positive-electrode collector 10A due to softening thereof by heat and decomposition of the positive-electrode active material contained in the raw-material sol do not occur.

As a result of Step 4, a positive-electrode member in which a positive-electrode active-material layer is formed on a surface of a positive-electrode collector is formed. At the time when Step 4 is completed, active-material particles in the positive-electrode active-material layer are partially in point contact with each other and lithium-ion conductivity between the particles is low. In addition, in such a state, the average distance of gaps between the particles is long. The lithium-ion-conductive solid electrolyte is disposed in the gaps between the particles and hence lithium ions can be conducted. However, when the average distance is long, lithium-ion conductivity in the entirety of the positive-electrode active-material layer becomes low. In addition, the positive-electrode active-material layer has cavities formed by evaporation of the solvent of the raw-material sol.

### <<Step 5>>

When the positive-electrode member in which the positive-electrode active-material layer is formed on a surface of the positive-electrode collector is pressed, it should be compressed from both surfaces thereof. Specifically, a pressure is applied such that the surface of the positive-electrode collector and the surface of the positive-electrode active-material layer in the positive-electrode member approach each other. As a result of this pressing, the positive-electrode active-material particles in the positive-electrode active-material layer are plastically deformed such that the particles that are next to each other partially conform to each other. At the same time, the cavities formed in the positive-electrode active-material layer in Step 4 are squashed and thereby removed.

The pressure applied in the pressing is preferably in the range of 100 to 1000 MPa. When a pressure in this range is applied, active-material particles can be plastically deformed regardless of the type of the particles and the cavities can be substantially eliminated.

### <Positive-electrode member>

The positive-electrode member 10 obtained by Steps 1 to 5 above includes the positive-electrode collector 10A that is a metal plate and the positive-electrode active-material layer 10B disposed on a surface of the positive-electrode collector 10A. The positive-electrode active-material layer 10B includes a group of particles of the positive-electrode active material and a solid electrolyte fixing the particle group. The particle group in the positive-electrode active-material layer has been plastically deformed by the pressing in Step 5.

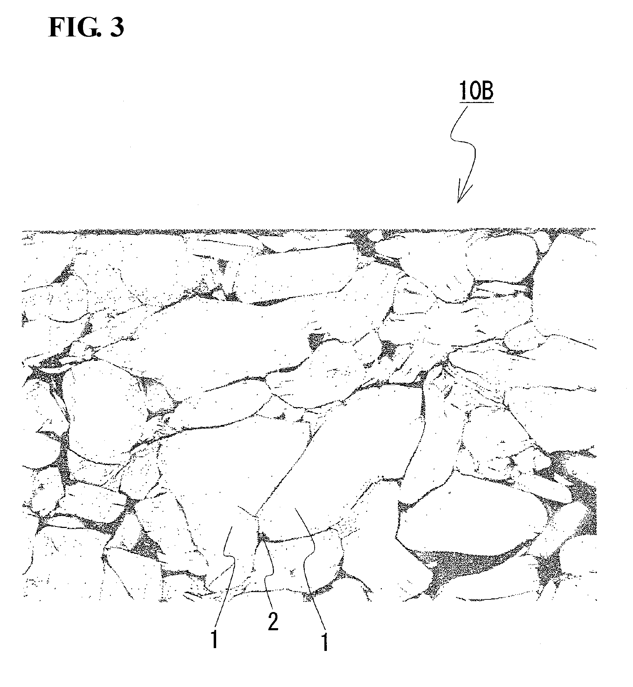

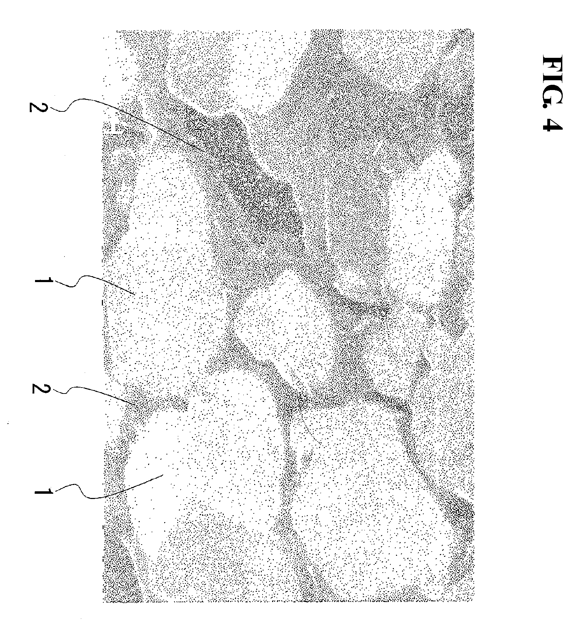

Figure 3 is a schematic view schematically illustrating a SEM photograph of a section of the positive-electrode active-material layer 10B included in a positive-electrode member in EXAMPLE 1 described below. As illustrated in Fig. 3, in the positive-electrode active-material layer 10B of a positive-electrode member obtained by Steps 1 to 5 according to the present invention, among combinations of neighboring positive-electrode active-material particles 1 and 1, combinations in which contours partially conform to each other account for 30% or more of all the combinations. "Combinations in which contours partially conform to each other" refers to pairs of neighboring active-material particles 1 and 1 in which the length over which the particles 1 and 1 of each pair conform to each other accounts for 30% or more of the total contour length of at least one particle 1 out of the pair of particles 1 and 1. The contours of neighboring active-material particles 1 and 1 partially conform to each other because the positive-electrode member is compressed so as to be sandwiched from both sides thereof and, as a result, each particle 1 has been plastically deformed (refer to Step 5 in the above production method). In general, the external shapes of the provided particles are different from each other. Accordingly, when the particles are simply fixed with a solid electrolyte without being pressed or the particles are pressed with a pressure with which the particles are not plastically deformed, even small portions of the contours of the particles are scarcely made to conform to each other. Even when portions of the contours happen to conform to each other, the portions correspond to 5% or less of the contours. For example, Fig. 4 is a schematic view schematically illustrating a SEM photograph of a section of the positive-electrode active-material layer 10A included in a positive-electrode member (positive-electrode member that is prepared under pressing by which positive-electrode active-material particles are not plastically deformed) in COMPARATIVE EXAMPLE 2 described below. As is clearly observed in Fig. 4, in the positive-electrode member in COMPARATIVE EXAMPLE 2, substantially no portions of the contours of the particles 1 and 1 conform to each other.

In addition to such visual inspection described above, plastic deformation of active-material particles can also be confirmed by measuring a specific physical quantity. For example, when it is found that, by X-ray diffractometry, the peak of active-material particles in a pressed positive-electrode member deviates from the peak of active-material particles serving as the raw material, as a result of this, it can be confirmed that strain has been introduced into the active-material particles, that is, the active-material particles have been plastically deformed.

### <Battery configuration other than positive-electrode layer>

### <<Negative-electrode layer>>

As described above, the negative-electrode layer 20 includes the negative-electrode collector 20A and the negative-electrode active-material layer 20B. The negative-electrode collector 20A is a layer composed of a metal such as Al, Ni, or Fe, or an alloy of the foregoing. The negative-electrode active-material layer 20B is a layer composed of a negative-electrode active material such as Li, Si, In, or an alloy of the foregoing.

### <<Electrolyte layer>>

The electrolyte layer 30 may be a solid composed of a sulfide such as Li₂S-P₂S₅ or an oxide such as Li-P-O-N or a nonaqueous organic electrolytic solution obtained by dissolving a lithium-ion-conductive material such as LiPF₆ in an organic solvent. When an organic electrolytic solution is employed, a separator (composed of, for example, polypropylene or polyethylene) that insulates the positive-electrode layer 10 and the negative-electrode layer 20 from each other is disposed between these layers.

### <<Another component>>

When the electrolyte layer 30 is composed of a sulfide-based solid electrolyte, there may be cases where the resistance of the interface between the electrolyte layer 30 and the positive-electrode layer 10 increases and the capacity of the battery decreases. Thus, an intermediate layer that suppresses such an increase in the resistance of the interface is preferably disposed between the solid electrolyte layer 30 and the positive-electrode layer 10. The intermediate layer may be composed of a lithium-containing oxide such as LiNbO₃.

### (Second embodiment)

### <General configuration of nonaqueous electrolyte battery>

Figure 2 is a schematic longitudinal sectional view illustrating a lithium-ion battery (nonaqueous electrolyte battery) according to the second embodiment. This lithium-ion battery 200 has the same configuration as the battery according to the first embodiment except that it includes a positive-electrode layer (positive-electrode member) 11 including a porous positive-electrode collector (porous collector) 11A having pores and a positive-electrode active-material phase 11B formed in the pores. Accordingly, only the positive-electrode member 11, which is the difference from the first embodiment, will be described below.

The positive-electrode member 11 according to the second embodiment is produced by a production method including the following steps 1 to 5.
[Step 1] Provide an alkoxide solution obtained by dissolving, in a solvent, metal alkoxides that turn into a lithium-ion-conductive solid electrolyte through polycondensation, or an alkoxide solution obtained by dissolving hydrolysates of the metal alkoxides in a solvent.
[Step 2] Prepare a raw-material sol by mixing the alkoxide solution in Step 1 with active-material particles.
[Step 3] Provide the porous positive-electrode collector (porous collector) 11A that is a metal member and apply the raw-material sol in Step 2 to a surface of the porous collector 11A.
[Step 4] Turn the metal alkoxides or the hydrolysates of the metal alkoxides in the raw-material sol into the solid electrolyte through polycondensation by heating, to form, in the pores of the porous collector 11A, the positive-electrode active-material phase 11B in which the group of the positive-electrode active-material particles is fixed with the solid electrolyte.
[Step 5] Press the positive-electrode active-material phase 11B to plastically deform the positive-electrode active-material particles in the positive-electrode active-material phase 11B such that the contours of the particles that are next to each other partially conform to each other.
Note that Steps 1 and 2 in the second embodiment are the same as Steps 1 and 2 in the first embodiment and hence are not described.

### <<Step 3>>

The porous collector 11A may be formed of, for example, a metal foam formed by foaming molten metal. Alternatively, the porous collector 11A may be a member obtained by covering nonwoven fabric or woven fabric formed of a resin such as urethane with metal and eliminating the resin by a heat treatment.

The porosity of the porous collector 11A (the total percentage of all the pores with respect to the collector) is preferably 90 to 98 vol%, more preferably 95 to 98 vol%. When the collector has such a porosity, a sufficiently large current-collecting area can be ensured and the collector can be filled with the raw-material sol in an amount required for a high-power battery.

In Step 3, the pores of the porous collector 11A are filled with the raw-material sol prepared in Step 2 by, for example, immersing the porous collector 11A in the raw-material sol in a vacuum vessel and evacuating the vacuum vessel. In this way, the pores of the porous collector 11A can be fully impregnated with the raw-material sol.

### <<Step 4>>

To turn the metal alkoxides into a solid electrolyte through hydrolysis and polycondensation or to turn the hydrolysates of the metal alkoxides into a solid electrolyte through polycondensation, a heat treatment should be performed. The heat treatment is preferably performed at 200°C to 300°C for 0.5 to 6 h. When the solid electrolyte is generated at such a temperature, a decrease in the strength of the porous collector 11A due to softening thereof by heat and decomposition of the positive-electrode active material contained in the raw-material sol do not occur.

As a result of Step 4, the positive-electrode member 11 in which the positive-electrode active-material phase 11B is formed so as to fill the pores of the porous collector 11A is produced. At the time when Step 4 is completed, active-material particles in the positive-electrode active-material phase 11B are partially in point contact with each other and lithium-ion conductivity between the particles is low. In addition, in such a state, the average distance of gaps between the particles is long. The lithium-ion-conductive solid electrolyte is disposed in the gaps between the particles and hence lithium ions can be conducted. However, when the average distance is long, the lithium-ion conductivity of the entirety of the positive-electrode active-material phase 11B becomes low. In addition, the positive-electrode active-material phase 11B has cavities formed by evaporation of the solvent of the raw-material sol.

### <<Step 5>>

When the positive-electrode member 11 in which the positive-electrode active-material phase 11B is formed in the pores of the porous collector 11A is pressed, a pressure is applied such that the front surface and the back surface of the positive-electrode member 11 approach each other. As a result of this pressing, the positive-electrode active-material particles in the positive-electrode active-material phase 11B are plastically deformed such that the particles that are next to each other partially conform to each other. At the same time, the cavities formed in the positive-electrode active-material phase 11B in Step 4 are squashed and thereby removed. After the pressing, the porous collector 11A composed of metal serves as a framework to maintain the shape of the positive-electrode member 11 having been deformed by the pressing.

The positive-electrode member 11 obtained by Steps 1 to 5 described above includes the porous collector 11A that is composed of metal and the positive-electrode active-material phase 11B formed in the pores of the porous collector 11A. The positive-electrode active-material phase 11B includes the group of positive-electrode active-material particles and a solid electrolyte fixing the particle group. The state of the particle group in the positive-electrode active-material phase 11B is substantially the same as the state of the particle group in the positive-electrode active-material layer 10B described with reference to Fig. 3, and the contours of the positive-electrode active-material particles that are next to each other partially conform to each other.

### EXAMPLES

The lithium-ion batteries 100 (EXAMPLES 1 and 2) according to the first embodiment described with reference to Fig. 1 and the lithium-ion battery 200 (EXAMPLE 3) according to the second embodiment described with reference to Fig. 2 were actually produced and characteristics (discharge capacity, internal resistance, and cycle characteristic) of these batteries were evaluated. In addition, lithium-ion batteries (COMPARATIVE EXAMPLES 1 to 3) compared with batteries according to the present invention were produced and the characteristics of the batteries were also evaluated.

### <EXAMPLE 1>

### <<Production of positive-electrode member>>

Equimolar amounts of a cobalt carbonate (CoCO₃) powder and a lithium carbonate (Li₂CO₃) powder were mixed and baked at 900°C for 6 hours to provide a LiCoO₂ powder. The LiCoO₂ powder had an average particle size (50% particle size) of 10 µm.

An alkoxide solution was provided that was obtained by dissolving an equimolar mixture of ethoxylithium (LiOC₂H₅) and pentaethoxyniobium (Nb(OC₂H₅)₅) in an ethanol solvent. The content of the equimolar mixture in the alkoxide solution was 15 mol/ml. The alkoxide solution had a viscosity of 200 mPa·s.

The prepared alkoxide solution (6 ml) was mixed with 100 g of the LiCoO₂ powder to prepare a raw-material sol. Thus, the content of LiCoO₃ was 16.7 g/ml.

A steel use stainless (SUS) 316L member having a thickness of 10 µm was subsequently provided as a positive-electrode collector. The raw-material sol was applied to a surface of the positive-electrode collector so as to have an average thickness of 100 µm. The surface of the positive-electrode collector had an arithmetic mean roughness Ra (JIS B0601 2001) of 44 nm. The raw-material sol was heat-treated at about 75°C for an hour and, as a result, the ethanol solvent contained in the raw-material sol was removed, and sodium ethoxide and pentaethoxyniobium were subjected to hydrolysis and polycondensation and turned into LiNbO₃. Thus, a positive-electrode member was formed that included, on the positive-electrode collector, the positive-electrode active-material layer in which the group of the positive-electrode active-material particles was substantially uniformly dispersed and fixed in the solid electrolyte.

Finally, the positive-electrode member was pressed at 500 MPa so as to be sandwiched from both sides thereof. Thus, a positive-electrode member according to the present invention was completed.

Figure 3 schematically illustrates a SEM photograph of a section of the positive-electrode active-material layer in a positive-electrode member produced under the above-described conditions. Observation of the details of the state of the positive-electrode active-material particles 1 in the positive-electrode active-material layer 10B in Fig. 3 revealed that the active-material particles 1 were plastically deformed so that the contours of the particles 1 and 1 that were next to each other partially conformed to each other, and that the solid electrolyte 2 fixing the active-material particles 1 had a uniform phase substantially having no grain boundaries. In addition, in the field of view observed, no cavities were observed in the positive-electrode active-material layer 10B. The area percentage of the solid electrolyte 2 in a section of the positive-electrode active-material layer 10B was about 3%. The distance between the particles 1 that were next to each other was mostly 500 nm or less.

### <<Production of lithium-ion battery>>

A lithium-ion battery (nonaqueous electrolyte battery) was then actually produced with the produced positive-electrode member.

The positive-electrode member 10 produced was used as a base member. An intermediate layer (not shown) that had an average thickness of 10 nm and was composed of LiNbO₃ was formed by excimer-laser ablation on a surface (the surface of the positive-electrode active-material layer 10B) of the base member. The intermediate layer suppresses an increase in the resistance of the interface between the positive-electrode active-material layer 10B and the solid electrolyte layer 30.

The solid electrolyte layer 30 that had an average thickness of 10 µm and was composed of Li₂S and P₂S₅ was formed by excimer-laser ablation on the intermediate layer.

The negative-electrode active-material layer 20B that had an average thickness of 4 µm and was composed of Li was formed by resistance heating on the electrolyte layer 30.

The negative-electrode collector 20A composed of Cu was formed by resistance heating on the negative-electrode active-material layer 20B. The multilayer member in which the negative-electrode collector 20A had been formed was then sealed in an aluminum laminate pack and tab leads were extracted from the positive-electrode collector 10A and the negative-electrode collector 20A. Thus, the battery 100 was completed.

### EXAMPLE 2>

A battery in EXAMPLE 2 was produced with a positive-electrode collector having a surface with an Ra of 100 nm or more (measured value was 431 nm). The battery in EXAMPLE 2 was produced with the same materials and conditions as in the battery in EXAMPLE 1 except that the Ra of the surface of the positive-electrode collector was different from that in EXAMPLE 1.

### EXAMPLE 3>

A battery in EXAMPLE 3 was produced with a porous positive-electrode collector. The battery in EXAMPLE 3 had the same configuration as in the second embodiment described with reference to Fig. 2 and was produced with the same materials and conditions as in the battery in EXAMPLE 1 except for the following respects.

The porous collector 11A used was formed of nickel Celmet (registered trademark of Sumitomo Electric Industries, Ltd.), which is a Ni metal foam. The porous collector 11A had an average thickness of 100 µm and a porosity of 95 vol%.

To form the positive-electrode active-material phase 11B in the pores of the porous collector 11A, the porous collector 11A was immersed in a raw-material sol prepared in the same manner as in EXAMPLE 1 and placed in a vacuum vessel, and the entirety of the vacuum vessel was evacuated so as to be at 50 kPa. The pores of the porous collector 11A were impregnated with the raw-material sol by the immersion and evacuation.

After the vacuum impregnation, the porous collector 11A was withdrawn from the raw-material sol and heated in the air at 75°C for 1 h and, as a result, the ethanol solvent contained in the raw-material sol was removed, and sodium ethoxide and pentaethoxyniobium were subjected to hydrolysis and polycondensation and turned into LiNbO₃. Thus, a positive-electrode member 11 was formed that included, in the pores of the porous collector 11A, the positive-electrode active-material phase 11B in which the group of the positive-electrode active-material particles was substantially uniformly dispersed and fixed in the solid electrolyte.

Observation of a section of the produced positive-electrode member 11 with a scanning electron microscope revealed that the positive-electrode active-material phase 11B was formed so as to fill the pores of the porous collector 11A. The state of the positive-electrode active-material particles and the solid electrolyte in the positive-electrode active-material phase 11B was the same as the state of the positive-electrode active-material layer in EXAMPLE 1 described with reference to Fig. 3.

### <COMPARATIVE EXAMPLE 1>

A battery of COMPARATIVE EXAMPLE 1 was produced with a positive-electrode member that was completed without pressing after the formation of a positive-electrode active-material layer on a surface of a positive-electrode collector. The battery of COMPARATIVE EXAMPLE 1 was produced with the same materials and conditions as in the battery in EXAMPLE 1 except that the positive-electrode member was not pressed.

Observation of the state of the positive-electrode active-material particles in the positive-electrode active-material layer included in the positive-electrode member in COMPARATIVE EXAMPLE 1 revealed that the active-material particles were not plastically deformed and neighboring particles were in point contact with each other. In addition, cavities probably formed by evaporation of the solvent of the alkoxide solution were formed in the positive-electrode active-material layer. The area percentage of the solid electrolyte in a section of the positive-electrode active-material layer was about 3%. Since pressing was not performed, the distance between the particles 1 that were next to each other was mostly 1000 nm or more.

### <COMPARATIVE EXAMPLE 2>

A battery of COMPARATIVE EXAMPLE 2 was produced with a positive-electrode member that was completed with the application of a pressure of 57 MPa after the formation of a positive-electrode active-material layer on a surface of a positive-electrode collector. The battery of COMPARATIVE EXAMPLE 2 was produced with the same materials and conditions as in the battery in EXAMPLE 1 except for the pressure applied.

As illustrated in a SEM photograph in Fig. 4, observation of the state of positive-electrode active-material particles in the positive-electrode active-material layer in the positive-electrode member in COMPARATIVE EXAMPLE 2 revealed that the active-material particles 1 were not plastically deformed and neighboring particles 1 and 1 were in point contact with each other. The solid electrolyte 2 that was uniform and substantially had no grain boundaries was formed in the gaps between the particles 1 and 1. Substantially, no cavities were observed in the solid electrolyte 2. The area percentage of the solid electrolyte 2 in a section of the positive-electrode active-material phase 11B was about 3%. Since the pressure applied was low, the distance between the particles 1 that were next to each other was mostly 1000 nm or more.

### <COMPARATIVE EXAMPLE 3>

A battery of COMPARATIVE EXAMPLE 3 was produced with a positive-electrode member including a positive-electrode active-material layer formed of a sinter. The positive-electrode member in COMPARATIVE EXAMPLE 3 was obtained by providing the positive-electrode active-material layer formed of a sinter and subsequently depositing a positive-electrode collector onto a surface of the active-material layer by a vapor-phase method. The dimensions of the active-material layer and the collector in the positive-electrode member and the battery configuration other than the positive-electrode member were the same as in the batteries in EXAMPLES.

### <Evaluation of properties of batteries>

The produced batteries in EXAMPLES 1 to 3 and COMPARATIVE EXAMPLES 1 to 3 were charged at a constant current of 0.05 mA until 4.2 V was reached and the discharge capacity (mAh/cm²) thereof was measured in discharging at 3 V The internal resistance of the batteries was determined from voltage drop at the initiation of discharging. In addition, capacity retention (%) of the batteries was measured. The capacity retention is obtained by dividing a discharge capacity at the 100th cycle by the maximum discharge capacity in the 100 cycles. The measurement results are described in Table.

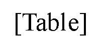

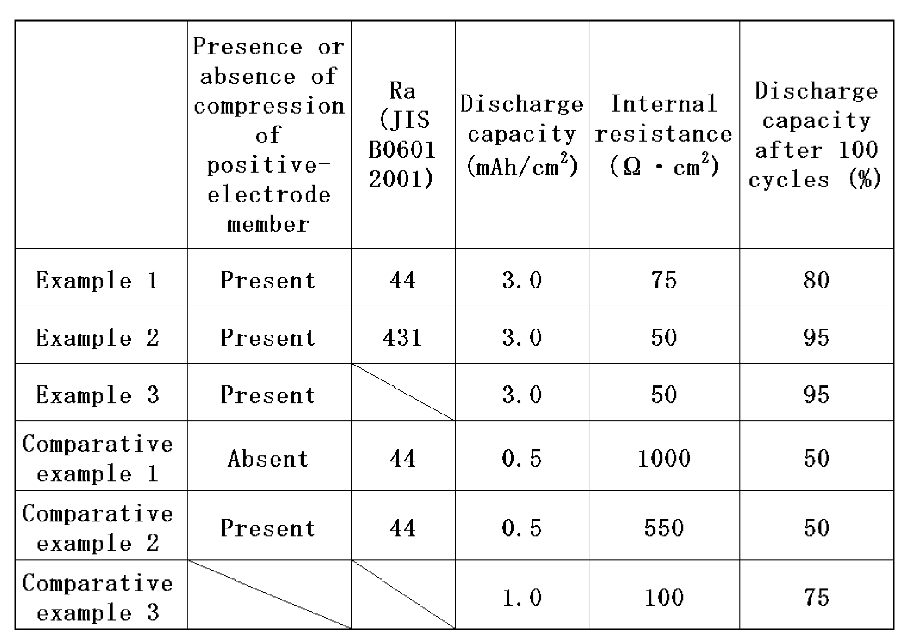

As described in Table, the batteries in EXAMPLES 1 to 3 had a low internal resistance, a high discharge capacity, and an excellent cycle characteristic, compared with the batteries in COMPARATIVE EXAMPLES 1 to 3. In particular, comparison between the battery in EXAMPLE 1 and the batteries in COMPARATIVE EXAMPLES 1 and 2 shows that the only difference between the batteries was whether the active-material particles in the positive-electrode active-material layer were plastically deformed or not. Thus, it has been revealed that it is important that the positive-electrode member is compressed until the active-material particles are plastically deformed. Comparison between the batteries in EXAMPLES 1 to 3 has revealed that, by roughening a surface of a positive-electrode collector as in the battery in EXAMPLE 2 or using a porous positive-electrode collector as in the battery in EXAMPLE 3, battery characteristics can be enhanced, compared with the battery in EXAMPLE 1 produced by simply compressing a positive-electrode active-material layer formed so as to have the shape of a layer.

Note that the present invention is not limited to the above-described embodiments and the embodiments can be appropriately modified without departing from the spirit and scope of the present invention.

### Industrial Applicability

A positive-electrode member according to the present invention produced by a method for producing a positive-electrode member according to the present invention can be suitably used as a positive-electrode layer of a nonaqueous electrolyte battery used as a power supply of a portable device or the like.

### Reference Signs List

- 100, 200: lithium-ion battery (nonaqueous electrolyte battery)
- 10, 11: positive-electrode layer
- 10A: positive-electrode collector
- 10B: positive-electrode active-material layer
- 11A: positive-electrode collector
- 11B: positive-electrode active-material phase
- 20: negative-electrode layer
- 20A: negative-electrode collector
- 20B: negative-electrode active-material layer
- 30: electrolyte layer
- 1: positive-electrode active-material particle
- 2: solid electrolyte

## Claims

1. A positive-electrode member used as a positive-electrode layer of a nonaqueous electrolyte battery,
the positive-electrode member comprising:
a positive-electrode collector composed of a metal; and a positive-electrode active-material portion that allows for electron transfer between the positive-electrode active-material portion and the positive-electrode collector,
wherein the positive-electrode active-material portion includes a group of particles of a positive-electrode active material and a solid electrolyte that fixes the group of the particles, and
contours of the particles that are next to each other partially conform to each other.

2. The positive-electrode member according to Claim 1,
wherein the positive-electrode collector is a solid plate, and
the positive-electrode active-material portion is a layer disposed on a surface of the positive-electrode collector.

3. The positive-electrode member according to Claim 2, wherein the surface of the positive-electrode collector has an arithmetic mean roughness Ra (Japanese Industrial Standard (JIS) B0601 2001) of 100 nm or more.

4. The positive-electrode member according to Claim 2 or 3, wherein an area percentage of the solid electrolyte in an arbitrary section of the positive-electrode active-material portion is 20% or less.

5. A method for producing a positive-electrode member used as a positive-electrode layer of a nonaqueous electrolyte battery, the method comprising:
a step of providing an alkoxide solution obtained by dissolving, in a solvent, metal alkoxides that turn into a lithium-ion-conductive solid electrolyte through polycondensation, or an alkoxide solution obtained by dissolving hydrolysates of the metal alkoxides in a solvent;
a step of preparing a raw-material sol by mixing the alkoxide solution with active-material particles;
a step of providing a positive-electrode collector that is a metal plate and applying the raw-material sol to a surface of the positive-electrode collector;
a step of turning the metal alkoxides or the hydrolysates of the metal alkoxides in the raw-material sol into the solid electrolyte through polycondensation by heating, to form a positive-electrode active-material portion that is a layer in which a group of the positive-electrode active-material particles is fixed with the solid electrolyte on the surface of the positive-electrode collector; and
a step of pressing the positive-electrode active-material portion to plastically deform the particles in the positive-electrode active-material portion such that contours of the particles that are next to each other partially conform to each other.

6. The method for producing a positive-electrode member according to Claim 5, wherein the surface of the positive-electrode collector has an arithmetic mean roughness Ra (JIS B0601 2001) of 100 nm or more.

7. The method for producing a positive-electrode member according to Claim 5 or 6, wherein, in the pressing, a pressure in a range of 100 to 1000 MPa is applied.

8. The positive-electrode member according to Claim 1,
wherein the positive-electrode collector is a porous member including a plurality of pores, and
the positive-electrode active-material portion is disposed in the pores of the positive-electrode collector.

9. The positive-electrode member according to Claim 8, wherein an area percentage of the solid electrolyte in an arbitrary section of the positive-electrode active-material portion is 20% or less.

10. The positive-electrode member according to Claim 8 or 9, wherein a porosity that represents a percentage of the pores with respect to the porous member is 90 to 98 vol%.

11. A method for producing a positive-electrode member used as a positive-electrode layer of a nonaqueous electrolyte battery, the method comprising:
a step of providing an alkoxide solution obtained by dissolving, in a solvent, metal alkoxides that turn into a lithium-ion-conductive solid electrolyte through polycondensation, or an alkoxide solution obtained by dissolving hydrolysates of the metal alkoxides in a solvent;
a step of preparing a raw-material sol by mixing the alkoxide solution with active-material particles;
a step of providing a positive-electrode collector that is a porous metal member and filling pores of the positive-electrode collector with the raw-material sol;
a step of turning the metal alkoxides or the hydrolysates of the metal alkoxides in the raw-material sol into the solid electrolyte through polycondensation by heating, to form, in the pores, a positive-electrode active-material portion in which the active-material particles are fixed with the solid electrolyte; and
a step of pressing a positive-electrode active-material phase to plastically deform the particles in the positive-electrode active-material portion such that contours of the particles that are next to each other partially conform to each other.

12. The positive-electrode member according to Claim 11, wherein a porosity that represents a percentage of the pores with respect to the positive-electrode collector is 90 to 98 vol%.

13. The method for producing a positive-electrode member according to Claim 11 or 12, wherein, in the pressing, a pressure in a range of 100 to 1000 MPa is applied.
